(19) Europäisches Patentamt
European Patent Office
Office européen des brevets

(11) **EP 3 394 403 B1**

(12) **EUROPÄISCHE PATENTSCHRIFT**

(45) Veröffentlichungstag und Bekanntmachung des Hinweises auf die Patenterteilung:
**28.04.2021   Patentblatt 2021/17**

(21) Anmeldenummer: **17816526.2**

(22) Anmeldetag: **27.11.2017**

(51) Int Cl.:
*F01M 13/04* (2006.01)     *F02D 41/04* (2006.01)
*B04B 5/12* (2006.01)      *B04B 9/10* (2006.01)
*B04B 5/08* (2006.01)

(86) Internationale Anmeldenummer:
**PCT/EP2017/080557**

(87) Internationale Veröffentlichungsnummer:
**WO 2018/108510 (21.06.2018 Gazette 2018/25)**

(54) **VERFAHREN ZUM SCHUTZ EINES ROTATIONSSEPARATORS GEGEN VEREISUNG, UND ROTATIONSSEPARATOR**

METHOD FOR PROTECTING A ROTATION SEPARATOR FROM ICING, AND ROTATION SEPARATOR

PROCÉDÉ DE PROTECTION D'UN SÉPARATEUR ROTATIF CONTRE LE GIVRAGE ET SÉPARATEUR ROTATIF

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.12.2016   DE 102016124098**

(43) Veröffentlichungstag der Anmeldung:
**31.10.2018   Patentblatt 2018/44**

(73) Patentinhaber: **Hengst SE**
**48147 Münster (DE)**

(72) Erfinder:
• **ROBERT, Stefan**
**48356 Nordwalde (DE)**
• **RÖLVER, Martin**
**48329 Havixbeck (DE)**

(74) Vertreter: **Habbel, Ludwig**
**Habbel & Habbel**
**Patentanwälte**
**Am Kanonengraben 11**
**48151 Münster (DE)**

(56) Entgegenhaltungen:
**EP-A2- 1 464 797      EP-B1- 1 532 353**
**JP-A- 2010 096 033    JP-A- 2013 036 433**
**US-A1- 2013 125 857**

EP 3 394 403 B1

**Beschreibung**

Die Erfindung betrifft ein Verfahren nach dem Oberbegriff des Anspruchs 1.

Ein gattungsgemäßes Verfahren ist aus der EP 1 532 353 B1 bekannt. Das bekannte Verfahren wird zur Reinigung des Gasstroms genutzt, welcher aus dem Kurbelgehäuse einer Verbrennungskraftmaschine stammt. Von dem allgemeinen Prinzip eines Zentrifugalseparators, der beispielsweise auch als Zyklon ausgestaltet sein kann, welcher ohne drehbare Teile auskommt und vielmehr ein in Drehung versetztes Fluid aufweist, stellen Rotationsseparatoren eine Ausführungsvariante dar, bei welcher rotierende Bauteile vorgesehen sind, die jeweils als Rotor bezeichnet werden. Insbesondere können die Rotoren eine Vielzahl von stapelartig übereinander angeordneten Abscheideflächen aufweisen, wobei derartige Rotationsseparatoren in der Praxis auch als Tellerseparatoren bezeichnet werden. Im Rahmen des vorliegenden Vorschlags wird stets ein solcher Tellerseparator als beispielhafte Ausgestaltung eines Rotationsseparators herangezogen und erwähnt, ohne dass die vorliegende Erfindung auf diese Ausgestaltung des Rotationsseparators beschränkt ist.

Das gattungsgemäße Verfahren betrifft den Betrieb des Rotationsseparators während gleichzeitig auch die Verbrennungskraftmaschine betrieben wird, und insbesondere betrifft das gattungsgemäße Verfahren die Aufrechterhaltung eines bestimmten Gasdrucks im Kurbelgehäuse während des Betriebs der Verbrennungskraftmaschine.

In der Praxis finden Rotationsseparatoren nicht nur in industriellen Anlagen Anwendung, sondern, insbesondere als Tellerseparatoren, auch im Bereich des Automobilbaus. In diesem Fall werden sie nicht in beheizten Hallen betrieben, sondern im Freien. In geografisch kalten Regionen oder zur Winterzeit, und insbesondere dann, wenn die Betriebsdauer der Verbrennungskraftmaschine nur kurz ist, wie z. B. im Kurzstreckenverkehr, werden die Motorkomponenten einschließlich des Rotationsseparators nicht sehr warm. Wenn der durch den Rotationsseparator geführte Gasstrom feuchte Partikel enthält, beispielsweise Wassermoleküle, so kann der Effekt auftreten, dass die Temperatur im Rotationsseparator den Taupunkt des Wassers unterschreitet. Dementsprechend können sich an den kalten Oberflächen innerhalb des Rotationsseparators Kondensate bilden und anlagern.

Die erwähnte Taupunktunterschreitung kann während des Betriebs der Verbrennungskraftmaschine auftreten, sofern die vorgesehene Betriebstemperatur nicht erreicht wird, und sie tritt jedenfalls auf, wenn der Rotationsseparator abkühlt, nachdem der Verbrennungsmotor eines Automobils abgestellt worden ist. Das Kondensat gefriert daher bei Erreichen seines Gefrierpunkts, bei Wasser also bei 0°C. Insbesondere wenn mehrere Kurzstrecken nacheinander absolviert werden, kann nicht ausgeschlossen werden, dass sich innerhalb des Rotationsseparators Eisschichten aufbauen, die eine Durchströmung des Rotationsseparators behindern. Beispielsweise können Zwischenräume zwischen den einzelnen Tellern des Tellerseparators durch derartige Eisschichten verschlossen werden, oder Lager des Rotors können vereisen, so dass bei einem Neustart der Verbrennungskraftmaschine der Rotationsseparator entweder nicht - oder mit einer Unwucht - in Drehung versetzt werden kann oder nicht wie vorgesehen durchströmt werden kann, so dass jedenfalls die Leistungsfähigkeit des Rotationsseparators teilweise oder vollständig beeinträchtigt sein kann.

Aus der EP 1 464 797 A2 ist es bekannt, den Rotor eines Rotationsseparators nach dem Abstellen der Verbrennungskraftmaschine eine bestimmte Zeitlang nachlaufen zu lassen, um so das Kurbelgehäusegas von den Inhalten zu reinigen, die sich auch nach dem Abstellen der Verbrennungskraftmaschine noch im Kurbelgehäusegas befinden.

Aus der JP 2010 096033 A ist es bekannt, im Bereich der Kurbelgehäuseentlüftung ein elektronisch ansteuerbares Ventil vorzusehen, welches nach dem Abstellen der Verbrennungskraftmaschine noch in seiner Offenstellung gehalten wird. Dieses Ventil ist als Bestandteil eines PCV-Systems vorgesehen (PCV = positive crankcase ventilation), also einer aktiven Kurbelgehäuse-Belüftung bzw. -Entlüftung. Durch das weiterhin offen gehaltene Ventil kann auch nach dem Abstellen der Verbrennungskraftmaschine eine Reinigung des Kurbelgehäusegases von den Inhalten erfolgen, die sich auch nach dem Abstellen der Verbrennungskraftmaschine noch im Kurbelgehäusegas befinden.

Aus der JP 2013 036433 A ist ein Kurbelgehäuse-Entlüfter bekannt. Dieser weist ein metallisches Filternetz als Abscheider auf. Um eine Vereisung des Abscheiders zu verhindern, ist ein elektrischer Heizdraht in dem Filternetz vorgesehen.

Der Erfindung liegt die Aufgabe zugrunde, ein gattungsgemäßes Verfahren dahingehend zu verbessern, dass der Rotationsseparator gegen Vereisung geschützt wird. Weiterhin liegt der Erfindung die Aufgabe zugrunde, einen gegen Vereisung geschützten Rotationsseparator anzugeben.

Diese Aufgabe wird durch ein Verfahren mit dem Verfahrensschritt nach Anspruch 1 und durch einen Rotationsseparator nach Anspruch 11 gelöst. Vorteilhafte Ausgestaltungen sind in den Unteransprüchen beschrieben.

Die Erfindung schlägt mit anderen Worten vor, den Rotationsseparator auch nach dem Abstellen der Verbrennungskraftmaschine erneut zu starten. Dies betrifft nicht den Fall, dass ein Rotor ggf. nach dem Abstellen des Verbrennungsmotors noch mit niedriger bzw. nachlassender Drehzahl nachläuft. Und es betrifft nicht die erneute Inbetriebnahme des Rotationsseparators, wenn auch die Verbrennungskraftmaschine erneut gestartet wird, sondern vielmehr einen Start des Rotationsseparators nach dem Abstellen der Verbrennungskraftmaschine und während die Verbrennungskraftmaschine noch still steht. Aus diesem Grund wird eine derartige Inbetriebnahme des Rotationsseparators im Rahmen des vorliegenden Vorschlags als Alleinstart bezeichnet.

Vorschlagsgemäß ist vorgesehen, beim Alleinstart den Rotor bis auf seine Wirkungsdrehzahl zu beschleunigen, also eine Drehzahl, die sicherstellt, dass auf dem Rotor abgeschiedene Partikel vom Rotor abgeschleudert werden, und die daher von der Drehzahl abweichen kann, mit welcher der Rotationsseparator bei laufender Verbrennungskraftmaschine betrieben wird. Durch den Alleinstart wird sichergestellt, dass beispielsweise eine Unwucht durch auf dem Rotor anhaftendes Eis vermieden werden kann, die sich ansonsten angesichts der hohen Drehzahl des Rotors bei der erneuten Inbetriebnahme des Rotationsseparators bei laufender Verbrennungskraftmaschine nachteilig auswirken könnte. Zudem wird sichergestellt, dass Kondensat vom Rotor abgeschleudert wird, so dass die Zwischenräume zwischen den Tellern eines Tellerseparators nicht durch eine Eisschicht blockiert bzw. verstopft werden, sondern vielmehr frei und für den Gasstrom durchlässig sind.

Vorteilhaft kann ein solcher Alleinstart nach einer vorbestimmten Zeitspanne durchgeführt werden, nachdem die Verbrennungskraftmaschine abgestellt worden ist. Dies stellt eine besonders einfache Art der Ansteuerung des Rotationsseparators dar, da außer einem ohnehin üblicherweise verfügbaren Zeitsignal keine weiteren Sensorsignale ausgewertet zu werden brauchen.

Alternativ oder auch ergänzend zu einer solchen Zeitsteuerung kann vorteilhaft die Temperatur erfasst und ein Alleinstart dann durchgeführt werden, wenn ein bestimmter Temperaturwert erreicht wird. Üblicherweise sind nämlich im Bereich des Rotationsseparators, oder als Außenthermometer eines Automobils, ohnehin Temperatursensoren vorgesehen, deren Werte z. B. in einer zentralen Motorsteuerung ausgewertet werden. Mit geringem steuerungstechnischem Aufwand kann daher unter Berücksichtigung der erfassten Temperatur sichergestellt werden, dass einerseits nach Unterschreitung des Taupunkts und andererseits vor einer beginnenden Vereisung der Alleinstart durchgeführt werden kann, so dass unter diesen Bedingungen zuverlässig das ggf. gebildete Kondensat abgeführt werden kann.

Je nachdem, wo der jeweilige Temperatursensor angeordnet ist, kann der Temperaturwert bestimmt werden, zu welchem der Alleinstart durchgeführt werden soll. Gegebenenfalls wird die Temperatur direkt am Rotationsseparator erfasst, vorzugsweise an einem Gehäuse, welches den Rotor umgibt, falls dieses Gehäuse beim Abkühlen die kälteste mit dem Innenraum des Rotationsseparators in Kontakt kommende Oberfläche darstellt. Wenn jedoch die Temperatur an anderer Stelle ausgewertet wird, so kann ggf. ein entsprechender Korrekturfaktor berücksichtigt und der zum Auslösen des Alleinstarts bestimmte Temperaturwert entsprechend gewählt werden.

Abgesehen von dem Temperaturwert allein kann vorteilhaft die Änderung der Temperatur in ihrem zeitlichen Verlauf erfasst werden, also ein Temperaturgradient ermittelt werden. In Abhängigkeit von der Abkühlgeschwindigkeit kann demzufolge der Alleinstart früh genug ausgelöst werden, bevor die Gefahr einer Vereisung besteht.

Vorteilhaft kann vorgesehen sein, dass nicht nur ein einziges Mal nach dem Abstellen der Verbrennungskraftmaschine ein Alleinstart durchgeführt wird, sondern vielmehr ein Alleinstart mehrmals nacheinander, in zeitlichen Abständen, durchgeführt wird. Auf diese Weise wird die Wahrscheinlichkeit erhöht, dass tatsächlich sämtliches Kondensat von dem Rotor abgeschleudert werden kann. Zudem kann ggf. durch Reibungswärme, die im Bereich der Lager des Rotors entsteht, der Abfluss von Kondensat, welches ggf. in ein Lager eingedrungen ist, unterstützt werden, und schließlich kann durch diese entstehende Wärme das Zeitfenster bis zur Eisbildung vergrößert werden.

Sollte bereits die Eisbildung eingesetzt haben, so kann durch die Drehbewegung des Rotors und in dessen Lagern ggf. bewirkt werden, dass Vereisungen, die auf einem Flüssigkeitsfilm auf dem Rotor schwimmen, abgeschleudert werden können und dass andere Vereisungen, die sich im Bereich der Lager bilden, aufgebrochen werden können, wenn die Drehbewegung des Rotors zu einem frühen Zeitpunkt der Eisschichtbildung erfolgt.

Es kann daher durch diese mehreren Alleinstarts mit sehr großer Wahrscheinlichkeit vermieden werden, dass der Rotationsseparator so weit einfriert, dass bei einem erneuten Start der Verbrennungskraftmaschine der Rotor festgefroren ist und sich nicht in Drehung versetzen lässt. Aus diesem Grund kann bewusst vorgesehen sein, dass bei Erfassung der Temperatur ein Alleinstart auch dann noch durchgeführt wird, wenn die Temperatur den Gefrierpunkt erreicht, oder wenn sie den Gefrierpunkt bereits unterschritten hat.

Der Rotor kann vorteilhaft elektrisch drehangetrieben sein. Abgesehen von dem offensichtlichen Vorteil auf diese Weise den Rotor antreiben zu können, nachdem die Verbrennungskraftmaschine still steht, ergibt sich dadurch auch ein weiterer Vorteil: Ggf. kann der elektrische Antrieb des Rotationsseparators derart angesteuert werden, dass er bewusst mit einem schlechten Wirkungsgrad arbeitet und die Verlustleistung des Antriebs in Form von Wärme abgibt. Auf diese Weise kann einer vorschnellen Auskühlung des Rotationsseparators entgegengewirkt werden und das Zeitfenster bis zum Erreichen des Gefrierpunkts länger offengehalten werden, so dass anfallendes Kondensat zuverlässig in flüssiger Form abgeführt werden kann.

Alternativ zu einem elektrischen Antrieb kann auch vorgesehen sein, den Rotor hydraulisch in Drehung zu versetzen, beispielsweise wenn in dem jeweiligen Fahrzeug ohnehin ein Hydraulikdruckspeicher vorgesehen ist.

Vorteilhaft kann vorgesehen sein, dass die beschriebene Routine nach einer maximalen Zeit im Anschluss an den Motorstopp beendet wird, so dass weitere Alleinstarts unterdrückt werden. Dadurch wird der Ruhestrom begrenzt, also die Entnahme elektrischer Energie aus einem Energiespeicher, der bei stillstehender Verbrennungskraftmaschine nicht geladen wird, beispielsweise weil ein mit der Verbrennungskraftmaschine gekoppelter Generator ebenfalls stillsteht.

Alternativ zum Erreichen einer solchen maximalen Zeitdauer kann vorgesehen sein, eine maximale Anzahl von Alleinstarts nach einem Motorstopp zu bestimmen.

Die Alleinstarts können unterdrückt werden, indem beispielsweise die Temperaturwerte nach dieser maximalen Zeit erst gar nicht ausgewertet werden, oder indem ein entsprechendes Startsignal trotz Auswertung der zum Alleinstart erforderlichen Randbedingungen - wie z. B. der Temperaturwerte - nach dieser maximalen Zeit von einer Steuerung nicht ausgelöst wird. Besonders energiesparend und daher besonders vorteilhaft kann die gesamte Steuerung in einen Ruhemodus schalten, der auch als "sleep mode" bezeichnet wird, und in welchem beispielsweise keine weitere Erfassung oder Berechnung von Werten erfolgt.

Eine lediglich beispielhafte Ausgestaltung des vorschlagsgemäßen Verfahrens wird anhand der rein schematischen Darstellungen nachfolgend näher erläutert. Dabei zeigt

Fig. 1    einen Längsschnitt durch einen Rotationsseparator,

Fig. 2    ein Temperatur-, Zeit- Diagramm, welches den Einsatz bzw. die Betriebszeiten des Rotationsseparators verdeutlicht, und

Fig. 3    ein Ablaufdiagramm betreffend die Ansteuerung des Rotationsseparators.

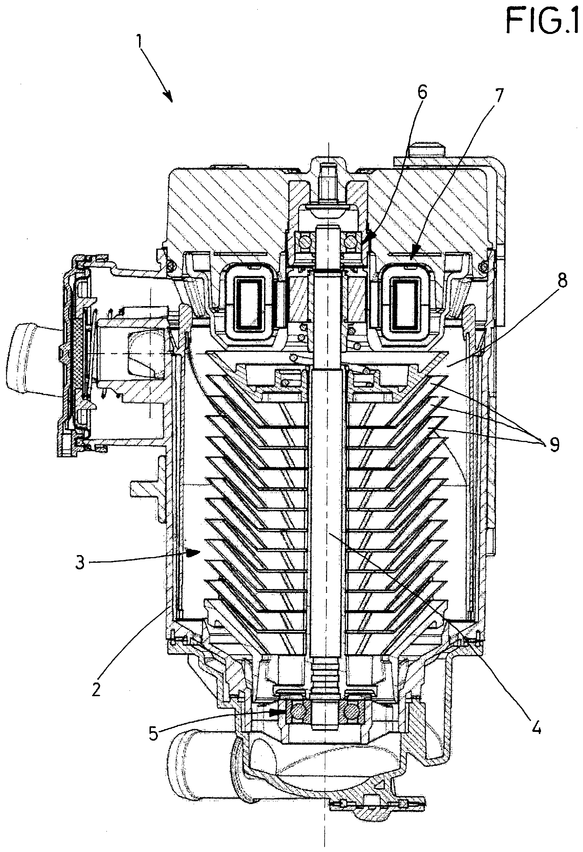

In Fig. 1 ist mit 1 insgesamt ein Rotationsseparator bezeichnet, der als so genannter Tellerseparator ausgestaltet ist. Der Rotationsseparator 1 weist ein Gehäuse 2 auf, in welchem ein Rotor 3 um eine vertikale Achse 4 drehbar gelagert ist. Hierzu ist die Achse 4 in einem unteren Fußlager 5 und einem oberen Kopflager 6 geführt. Unterhalb des Kopflagers 6 befindet sich eine elektrische Antriebseinheit 7, die unmittelbar an einen Innenraum 8 grenzt, in welchem sich, mit der Achse 4 drehend angetrieben, eine Vielzahl muldenförmiger Abscheideflächen befindet, die jeweils als Teller 9 bezeichnet sind. Die Antriebseinheit 7 weist eine Spule auf, welche konzentrisch um die Achse 4 verläuft.

Zwischen den Tellern 9 verbleiben flache Zwischenräume, die beispielsweise bis auf ein Maß von weniger als 0,5 mm reduziert sein können, und es sind Spalten mit geringen Querschnittsabmessungen vorgesehen, die der Abdichtung zw. Roh- und Reinseite dienen und auch als Spaltdichtung bezeichnet werden. Zudem kann nicht ausgeschlossen werden, dass das Fußlager 5 nicht vollständig gekapselt ist. Kondensat kann daher, gegebenenfalls durch die Schwerkraft oder durch Kapillarkräfte unterstützt, in die Spalten und Zwischenräume und auch in das Fußlager 5 gelangen.

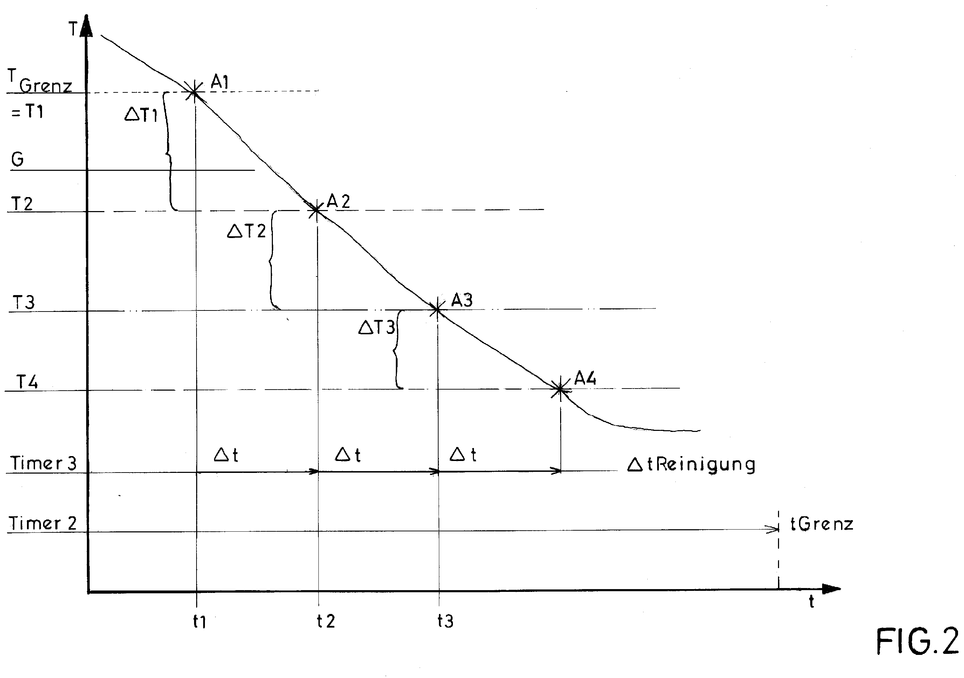

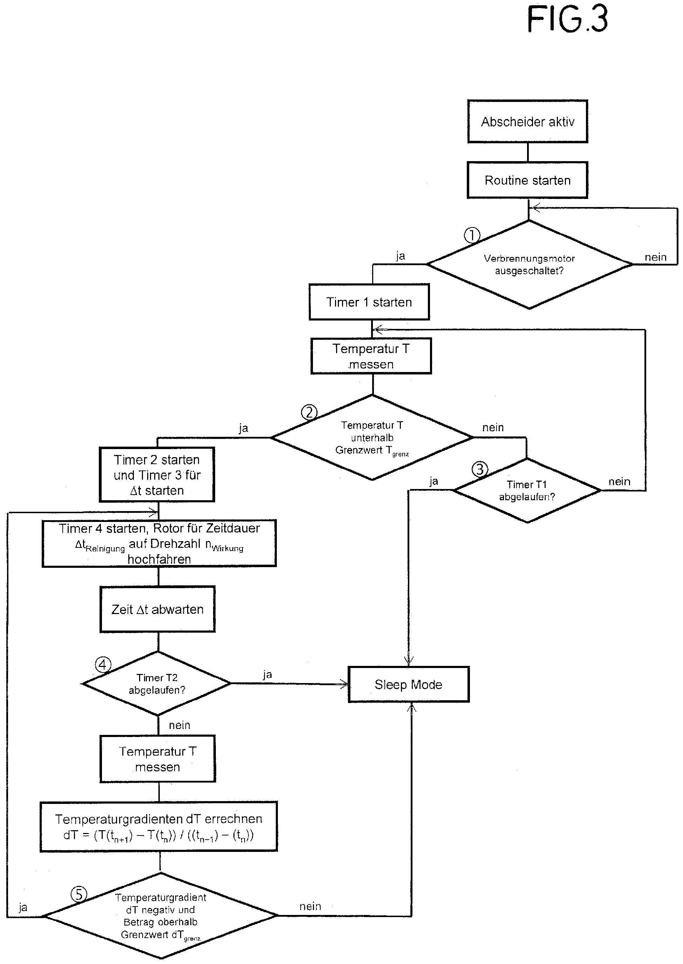

In Fig. 2 ist entlang einer liegenden Achse der Verlauf der Zeit (t) dargestellt, wobei über die Zeit (t) der Verlauf der Temperatur T (aufrechte Achse) aufgetragen ist, die für die Ansteuerung des Rotationsseparators 1 relevant ist und die am Rotationsseparator 1 oder davon entfernt erfasst werden kann. Zunächst nimmt der Rotationsseparator 1 eine Betriebstemperatur an, nämlich während des Betriebs der Verbrennungskraftmaschine, welcher der Rotationsseparator 1 zugeordnet ist. Von dem Zeitpunkt, an welchem der Betrieb der Verbrennungskraftmaschine endet, kühlt der Rotationsseparator 1 aus. Gleichzeitig wird mit dem Abstellen der Verbrennungskraftmaschine ein Timer 1 gestartet, der anhand von Fig. 3 noch näher erläutert werden wird. Diese Vorgänge liegen außerhalb des in Fig. 2 dargestellten Zeitfensters, welches vielmehr die bereits fortgeschrittene Abkühlkurve darstellt.

In der Steuerung, die für den Betrieb des Rotationsseparators 1 vorgesehen ist, ist eine Grenztemperatur $T_{Grenz}$ abgespeichert, bei deren Erreichen ein Taupunkt unterschritten ist, so dass sich Kondensat an den kühlen Flächen des Rotationsseparators 1 niedergeschlagen hat, die an den Innenraum 8 grenzen bzw. mit dem Innenraum 8 in Verbindung stehen. Dies betrifft einerseits das Gehäuse 2, andererseits jedoch auch den Rotor 3, insbesondere die Teller 9.

Bei Erreichen der Grenztemperatur $T_{Grenz}$ wird ein Timer 2 gestartet, der ein maximales Zeitfenster bis zum Zeitpunkt $t_{Grenz}$ vorgibt, innerhalb dessen die Alleinstarts des Rotationsseparators 1 durchgeführt werden. Weiterhin wird bei Erreichen der Grenztemperatur $T_{Grenz}$ ein Timer 3 gestartet, der für eine bestimmte Zeitdauer $\Delta t$ läuft, welche kürzer ist als die durch den Timer 2 bestimmte Zeitdauer. Und bei Erreichen der Grenztemperatur $T_{Grenz}$ wird ein erster Alleinstart A des Rotationsseparators 1 ausgelöst, was in Fig. 2 sternförmig auf der Abkühlkurve markiert ist. Weil es der erste Alleinstart ist, ist dieser in Fig. 2 mit $A_1$ bezeichnet. Derselben Logik folgend kann die Grenztemperatur $T_{Grenz}$ auch als Temperatur $T_1$ bezeichnet werden, da bei dieser Temperatur der erste Alleinstart $A_1$ erfolgt. Der Zeitpunkt, wenn die Grenztemperatur $T_{Grenz}$ bzw. $T_1$ erreicht wird, ist in Fig. 2 folglich als $t_1$ bezeichnet. Die Reinigungsdauer, während welcher ein Alleinstart durchgeführt wird, wird als $\Delta t_{Reinigung}$ bezeichnet, durch einen Timer 4 gesteuert, und ist kürzer als die dem Timer 3 zugeordnete Zeitdauer $\Delta t$.

Während des Ablaufs des Timers 3 unterschreitet die Abkühlkurve bei dem dargestellten Ausführungsbeispiel die Gefriertemperatur G von 0°C. Nach Ablauf des Timers 3 und somit der Zeitdauer $\Delta t$ wird ein zweiter Alleinstart $A_2$ des Rotationsseparators 1 bei einer Temperatur $T_2$ und zu einem Zeitpunkt $t_2$ ausgelöst. Außerdem wird der Timer 3 genullt und erneut gestartet, so dass nach dem erneuten Ablauf der Zeitdauer $\Delta t$ ein dritter Alleinstart $A_3$ bei einer Temperatur $T_3$ und zu einem Zeitpunkt $t_3$ ausgelöst wird. Analoges gilt für den dann folgenden Alleinstart $A_4$ und weitere - in Fig. 2 nicht dargestellte - Alleinstarts A, in denen jeweils der Rotor 3 für die Zeitdauer $\Delta t_{Reinigung}$ erneut in Drehung versetzt wird, wobei die Alleinstarts A durchgeführt werden, bis der Timer T2 abgelaufen ist und der Zeitpunkt $t_{Grenz}$ erreicht worden ist.

Bei jedem Alleinstart A wird der Rotor 3 auf seine Wirkungsdrehzahl $n_{Wirkung}$ beschleunigt, so dass auf den Tellern 9 befindliches Kondensat von dem Rotor 3 abgeschleudert wird. Zusammen mit dem Kondensat, welches sich ohnehin auf der inneren Oberfläche des Gehäuses 2 gebildet hat, kann dieses Kondensat nun nach unten abfließen und auf dem vorgesehenen Weg aus dem Innenraum 8 des Rotationsseparators 1 abgeführt werden. Diese jeweilige Inbetriebnahme des Rotationsseparators 1 unabhängig von der Verbrennungskraftmaschine ist in Fig. 2 jeweils als Alleinstart $A_1$, $A_2$, $A_3$ und $A_4$ gekennzeichnet.

Bei dem in Fig. 2 dargestellten Verfahrensablauf ist vorgesehen, dass die Alleinstarts A nach Erreichen der Grenztemperatur $T_{Grenz}$ bzw. $T_1$ stets nach einem bestimmten Zeitabstand $\Delta t$ ausgelöst werden. Da die Abkühlkurve nicht geradlinig verläuft, entsprechen den stets gleich großen Zeitintervallen $\Delta t$ Temperaturintervalle $\Delta T$ unterschiedlicher Größe, die sich an einen jeweiligen Alleinstart A anschließen: zunächst ergibt sich ein erstes, vergleichsweise großes Temperaturintervall $\Delta T_1$ von der Grenztemperatur $T_{Grenz}$ bzw. $T_1$ bzw. dem ersten Alleinstart $A_1$ bis zum zweiten Alleinstart $A_2$ und der zugeordneten Temperatur $T_2$. Aufgrund des flacher werdenden Verlaufs der Abkühlkurve sind die anschließenden Temperaturintervalle $\Delta T_2$ und $\Delta T_3$ sowie ggf. diejenigen Temperaturintervall $\Delta T$, die bis zum Erreichen des Zeitpunkts $t_{Grenz}$ noch weiter folgen, stets kleiner als das jeweils vorangegangene.

Abweichend von dem in Fig. 2 dargestellten Verfahrensablauf kann vorgesehen sein, die Alleinstarts A nicht nach vorbestimmten Zeitintervallen $\Delta t$ auszulösen, sondern nach vorbestimmten Temperaturintervallen $\Delta T$ während des Abkühlens, um die Bildung einer "abreinigungswürdigen" Menge an Kondensat sicherzustellen, so dass sich in einem solchen Fall unterschiedlich große Zeitintervalle $\Delta t$ vom einen zum nächsten Alleinstart A ergeben können.

Weiterhin kann abweichend von dem dargestellten Verfahrensablauf vorgesehen sein, die Auslösung eines Alleinstarts A nicht starr ausschließlich zeitabhängig oder ausschließlich temperaturabhängig zu steuern, sondern Grenzwerte für ein maximales zulässiges Zeitintervall $\Delta t_{max}$ sowie ein maximales zulässiges Temperaturintervall $\Delta T_{max}$ vorzusehen, die jeweils nicht überschritten werden sollen, so dass ein Alleinstart A flexibel in Abhängigkeit davon ausgelöst wird, ob entweder ein solches Zeitintervall $\Delta t_{max}$ oder ein solches Temperaturintervall $\Delta T_{max}$ erreicht worden ist.

Außerdem kann vorgesehen sein, den Verlauf der Abkühlkurve zu ermitteln, indem bestimmte Temperatur-/Zeit-Koordinatenpaare erfasst werden. Beispielsweise kann zu jedem Zeitpunkt eines Alleinstarts A auch die dabei herrschende Temperatur erfasst werden. Anhand des Vergleichs derartiger Koordinatenpaare kann die Abkühlgeschwindigkeit bestimmt werden, also der Temperaturgradient dT. Nähert sich die Abkühlkurve ihrem Grenzwert an und wird dabei immer flacher, so wird dieser Temperaturgradient dT immer kleiner. Es kann daher vorgesehen sein, ab Unterschreitung eines unteren Grenzwertes $dT_{Grenz}$ keinen Alleinstart A mehr durchzuführen, da voraussichtlich keine nennenswerte Menge an Kondensat mehr angefallen ist.

Auch wenn - beispielsweise durch einsetzende Sonnenstrahlung - die Temperaturkurve nicht als Abkühlkurve stetig fällt, sondern die Temperatur wieder ansteigt, wird kein weiteres Kondensat mehr anfallen. Bei der Ermittlung des genannten Temperaturgradienten dT kann daher vorteilhaft auch berücksichtigt werden, ob der Temperaturgradient negativ ist, die Temperatur also weiter fällt, oder ob der Temperaturgradient gegebenenfalls positiv ist, die Temperatur also ansteigt. Auch in einem solchen Fall eines positiven Temperaturgradienten dT kann vorgesehen sein, keinen Alleinstart A mehr durchzuführen, um den Ruhestrom zu begrenzen und Energie zu sparen.

In Fig. 2 ist ein zeitlicher Grenzwert $t_{Grenz}$ dargestellt, der durch den Timer 2 bestimmt ist, und nach dessen Erreichen keine weiteren Alleinstarts A mehr erfolgen, sondern vielmehr unterdrückt werden. Auch diese Maßnahme dient dazu, den Ruhestrom und damit die Entnahme elektrischer Energie aus einem Energiespeicher zu begrenzen.

Das in Fig. 3 dargestellte Ablaufdiagramm zeigt rein beispielhaft eine von mehreren Verfahrensweisen, den Rotationsseparator 1 vorschlagsgemäß zu steuern. Das Beispiel geht davon aus, dass der als "Abscheider" bezeichnete Rotationsseparator 1 einem Verbrennungsmotor eines Kraftfahrzeugs zugeordnet ist. Sobald eine elektronische Steuerung des Kraftfahrzeugs eingeschaltet wird, z.B. beim Einschalten der Zündung, wird der Rotationsseparator 1 aktiviert und auch die nachfolgend näher erläuterte Steuerungsroutine gestartet.

In einer ersten, durch einen Rhombus symbolisierten und mit ① gekennzeichneten Abfrage wird überprüft, ob der Verbrennungsmotor läuft oder stillsteht. Falls er nicht stillsteht, sondern läuft, wird diese Abfrage regelmäßig erneut durchgeführt.

Falls der Verbrennungsmotor jedoch stillsteht, wird der weiter oben bereits angesprochene erste Timer ("Timer 1") gestartet. Dieser Timer 1 bestimmt eine Zeitdauer, während welcher die Steuerungsroutine durchgeführt wird. Sollte diese Zeitdauer überschritten werden, beispielsweise weil die Temperatur während dieser Zeitdauer des Timers 1 nicht die Grenztemperatur $T_{Grenz}$ erreicht, so wird bis zum nächsten Start des Verbrennungsmotors und dem erneuten Abstellen des Verbrennungsmotors kein Alleinstart A durchgeführt werden. Vielmehr geht die Steuerung in einen Ruhemodus, der in Fig. 3 als "Sleep Mode" dargestellt ist und in dem die dargestellte Steuerungsroutine nicht weiter durchlaufen wird.

Zudem wird außer dem Timer 1 auch eine Temperaturerfassung gestartet. Ausgehend von einem ersten Temperaturwert bei Beginn der Temperaturerfassung wird die Temperatur typischerweise anschließend fallen.

In einer zweiten Abfrage ② wird überprüft, ob die Temperatur T die in Fig. 2 erläuterte Grenztemperatur $T_{Grenz}$ erreicht bzw. unterschreitet. Solange dies nicht der Fall ist, wird mittels einer dritten Abfrage ③ überprüft, ob der Timer 1 abgelaufen ist oder nicht. Falls dieser erste Timer 1 noch nicht abgelaufen ist, wird der Zyklus der Temperaturmessung und der zweiten Abfrage erneut durchlaufen. Falls der Timer 1 jedoch abgelaufen ist, wird die Steuerungsroutine beendet, die Steuerung schaltet in den "Sleep Mode" und es werden keine weiteren Alleinstarts A ausgelöst.

Liefert jedoch die zweite Abfrage das Ergebnis, dass die Grenztemperatur $T_{Grenz}$ erreicht bzw. unterschritten ist, wird der anhand von Fig. 2 erläuterte zweite Timer ("Timer 2") gestartet, welcher die Grenzzeit $t_{Grenz}$ bestimmt. Zudem wird der anhand von Fig. 2 erläuterte dritte Timer ("Timer 3") gestartet, welcher die Zeitdauer $\Delta t$ bestimmt. Und es wird der vierte Timer ("Timer 4") gestartet, welcher die Reinigungsdauer $\Delta t_{Reinigung}$ steuert, während welcher der Rotor 3 des Rotationsseparators 1 auf seine Wirkungsdrehzahl $n_{Wirkung}$ hochgefahren wird, um Kondensat vom Rotor 3 abzuschleudern. Die Reinigungsdauer $\Delta t_{Reinigung}$, während welcher der Rotor 3 in Drehung ist, ist kürzer als die Zeitdauer $\Delta t$.

Die Dauer der durch den Timer 2 bestimmten Grenzzeit $t_{Grenz}$ kann beispielsweise ein Mehrfaches der durch den Timer 3 bestimmten Zeitdauer $\Delta t$ betragen, so das auf diese Weise sichergestellt ist, dass mehrere Alleinstarts A durchgeführt werden können. Dabei dient die Grenzzeit $t_{Grenz}$ dazu, die Durchführung einer sinnvollen Anzahl von Alleinstarts A auch dann noch zu ermöglichen, wenn beispielsweise die Grenztemperatur $T_{Grenz}$, die zur Durchführung des ersten Alleinstarts $A_1$ führt, vergleichsweise spät erreicht werden sollte, also beispielsweise kurz bevor die durch den Timer 1 bestimmte Zeit abläuft. Nachdem die Grenztemperatur $T_{Grenz}$ erreicht und der erste Alleinstart $A_1$ ausgeführt ist, wird daher der Ablauf des Timer 1 nicht weiter überwacht; vielmehr bestimmt nun der Timer 2 den Zeitrahmen, innerhalb dessen die Steuerungsroutine weiter abläuft.

Es wird zunächst die Zeitdauer des Timers 3, also $\Delta t$, abgewartet. Anschließend erfolgt eine weitere Abfrage, die in Fig. 3 mit ④ gekennzeichnet ist: Falls nach Ablauf des Timers 3 der Timer 2 abgelaufen sein sollte, schaltet die Steuerung in den "Sleep Mode", die Steuerungsroutine wird also beendet und es werden keine weiteren Alleinstarts A ausgelöst.

Falls die Abfrage ④ jedoch ergibt, dass der Timer 2 noch nicht abgelaufen ist, wird nach dem Ablauf des Timers 3, also $\Delta t$, erneut die Temperatur T gemessen. Anschließend wird der Temperaturgradient dT berechnet als Quotient aus der Temperatur- und der Zeitdifferenz: die Berechnung erfolgt nach der Formel

$$dT = (T(tn+1) - T(tn)) / ((tn+1) - (tn)),$$

wobei hier n nicht die Drehzahl des Rotors betrifft, wie bei der Wirkungsdrehzahl $n_{Wirkung}$, sondern die Ordnungszahlen der einzelnen Temperatur- bzw. Zeiterfassungen anzeigt.

Nach dieser Berechnung des Temperaturgradienten dT erfolgt eine weitere Abfrage⑤, ob der Temperaturgradient dT negativ ist, also Ausdruck einer fallenden Temperatur ist, und ob der Betrag des Temperaturgradient in dT oberhalb eines festgelegten Grenzwertes $dT_{Grenz}$ liegt, also ausreichend steil verläuft. Unterhalb dieses Grenzwertes verläuft die Temperaturkurve wie weiter oben erläutert so flach, dass keine weitere Kondensatbildung zu erwarten ist und ein Alleinstart A daher unterdrückt wird.

Die beiden Bedingungen "negativer Temperaturgradient dT" und "dT > $dT_{Grenz}$" sind bei der Abfrage⑤ miteinander durch eine logische UND-Funktion verknüpft. Nur wenn beide Bedingungen gegeben sind, wird ein neuer Alleinstart A ausgelöst, also in einer Schleife die Steuerungsroutine durchfahren, indem der Rotor 3 erneut für die Reinigungsdauer $\Delta t_{Reinigung}$ auf die Wirkungsdrehzahl $n_{Wirkung}$ hochgefahren wird. Dabei werden die Timer 3 und Timer 4 erneut gestartet, so das erneut die Zeitdauer $\Delta t$ abgewartet wird, bis die Abfrage ④ erneut erreicht wird.

**Patentansprüche**

1. Verfahren zum Betreiben eines Rotationsseparators (1), wobei ein mit Partikeln beladener, aus einer Verbrennungskraftmaschine stammender Gasstrom einem als Rotor (3) bezeichneten, rotierend angetriebenen Element zugeführt wird,
   Partikel aus dem Gasstrom abgeschieden und an dem Rotor (3) abgelagert werden,
   wobei der Rotor (3) mit einer als Wirkungsdrehzahl bezeichneten Drehzahl betrieben wird, derart, dass aufgrund der Drehbewegung des Rotors (3) die an dem Rotor (3) abgelagerten Partikel vom Rotor (3) abgeschleudert werden,
   **dadurch gekennzeichnet,**
   **dass** nach dem Abstellen der Verbrennungskraftmaschine der Rotor (3) mittels eines so genannten Alleinstarts (A) bei still stehender Verbrennungskraftmaschine in eine Drehung mit Wirkungsdrehzahl versetzt wird.

2. Verfahren nach Anspruch 1,

**dadurch gekennzeichnet,**
**dass** ein Alleinstart (A) nach einer vorbestimmten Zeitspanne seit dem Abstellen der Verbrennungskraftmaschine durchgeführt wird.

3. Verfahren nach Anspruch 1 oder 2,
**dadurch gekennzeichnet,**
**dass** die Temperatur (T) erfasst wird und ein Alleinstart (A) durchgeführt wird, wenn ein bestimmter Temperaturwert erreicht wird.

4. Verfahren nach einem der vorhergehenden Ansprüche,
**dadurch gekennzeichnet,**
**dass** die Temperatur (T) und ihr zeitlicher Verlauf erfasst wird
und ein Alleinstart (A) in Abhängigkeit von dem Temperaturgradienten durchgeführt wird, wenn ein bestimmter Temperaturwert erreicht wird.

5. Verfahren nach einem der vorhergehenden Ansprüche,
**dadurch gekennzeichnet,**
**dass** ein Alleinstart (A) mehrmals nacheinander durchgeführt wird.

6. Verfahren nach einem der vorhergehenden Ansprüche,
**dadurch gekennzeichnet,**
**dass** die Temperatur (T) erfasst wird und ein Alleinstart (A) durchgeführt wird, wenn die Temperatur (T) den Gefrierpunkt (G) erreicht oder unterschritten hat.

7. Verfahren nach einem der vorhergehenden Ansprüche,
**dadurch gekennzeichnet,**
**dass** der Rotor (3) elektrisch drehangetrieben wird.

8. Verfahren nach Anspruch 7,
**dadurch gekennzeichnet,**
**dass** die elektrische Antriebseinheit (7) derart angesteuert und mit elektrischer Energie versorgt wird, dass ihre Wärmeabgabe gesteigert wird im Vergleich zu der lediglich durch den Antrieb des Rotors (3) resultierenden Wärmeabgabe.

9. Verfahren nach einem der vorhergehenden Ansprüche,
**dadurch gekennzeichnet,**
**dass** der Rotor (3) hydraulisch drehangetrieben wird.

10. Verfahren nach einem der vorhergehenden Ansprüche,
**dadurch gekennzeichnet,**
**dass** nach Erreichen einer bestimmten Zeitdauer nach dem Abstellen der Verbrennungskraftmaschine Alleinstarts (A) unterdrückt werden.

11. Rotationsseparator (1) zur Behandlung eines mit Partikeln beladenen, aus einer Verbrennungskraftmaschine stammenden Gasstroms,
mit einem drehangetriebenen Rotor (3),
und mit einer für den Betrieb des Rotationsseparators 1 vorgesehenen Steuerung,
welche den Rotationsseparator (1) in der Art ansteuert, dass er gemäß einem Verfahren 1 bis 10 betrieben wird.

**Claims**

1. Method for operating a rotation separator (1), where a stream of gas that is emitted by an internal combustion engine and is laden with particulate matter is conducted to a rotationally driven element referred to as a "rotor" (3),
where particulate matter is separated from the stream of gas and deposited on the rotor (3),
where the rotor (3) is driven at a speed referred to as "effective speed" in such a way that through the rotary movement of the rotor (3) the particulate matter that is deposited on the rotor (3) is flung off the rotor (3), **characterised in**
**that**, after the internal combustion engine has been stopped, the rotor (3) is made to rotate at effective speed by means of a so-called self-start (A) while the internal combustion machine is stationary.

2. Method in accordance with claim 1, **characterised in**
**that** a self-start (A) is carried out after a preset time period after the internal combustion engine has been stopped.

3. Method in accordance with claim 1 or claim 2, **characterised in**
**that** the temperature (T) is recorded and a self-start (A) is carried out when a certain temperature is reached.

4. Method in accordance with any one of the preceding claims, **characterised in**
**that** the temperature (T) and its progression over time is recorded and that a self-start (A) is carried out according to the temperature gradient when a certain temperature is reached.

5. Method in accordance with any one of the preceding claims, **characterised in**
**that** a self-start (A) is carried out a number of times in succession.

6. Method in accordance with any one of the preceding claims, **characterised in**
**that** the temperature (T) is recorded and a self-start (A) is carried out when the temperature (T) reaches or has fallen below freezing point (G).

7. Method in accordance with any one of the preceding claims, **characterised in that** the rotor (3) is rotationally driven electrically.

8. Method in accordance with claim 7, **characterised in that** the electrical drive unit (7) is actuated and supplied with electric power in such a way that the heat that is emitted by the electrical drive unit (7) is increased compared with the heat that results only from the drive of the rotor (3).

9. Method in accordance with any one of the preceding claims, **characterised in that** the rotor (3) is rotationally driven hydraulically.

10. Method in accordance with any one of the preceding claims, **characterised in that** after the end of a certain period after the internal combustion engine has been stopped self-starts (A) are suppressed.

11. Rotation separator (1) for treating a stream of gas that is emitted by an internal combustion engine and is laden with particulate matter, which rotation separator (1) has a rotationally driven rotor (3) and has a control system that is specifically intended for operating the rotation separator (1) and that actuates the rotation separator (1) in such a way that it is operated in accordance with a method described in 1 to 10.

**Revendications**

1. Procédé d'exploitation d'un séparateur rotatif (1), sachant qu'un flux de gaz chargé de particules provenant d'un moteur à combustion est conduit vers un élément entraîné en rotation appelé rotor (3), sachant que des particules sont séparées du flux de gaz et déposées sur le rotor (3) pour s'y accumuler, sachant que le rotor (3) est exploité à une vitesse dite vitesse efficace, de sorte qu'en raison du mouvement rotatif du rotor (3), les particules qui se sont accumulées contre le rotor (3) sont éjectées du rotor (3), **caractérisé en ce qu'**après avoir éteint le moteur à combustion, le rotor (3) est mis en rotation à la vitesse efficace au moyen d'un démarrage dit indépendant (A) à un moment où le moteur à combustion est immobile.

2. Procédé selon la revendication 1, **caractérisé en ce qu'**un démarrage indépendant (A) est exécuté au bout d'une période prédéfinie écoulée depuis l'arrêt du moteur à combustion.

3. Procédé selon la revendication 1 ou 2, **caractérisé en ce que** la température (T) est saisie et qu'un démarrage indépendant (A) est exécuté une fois qu'une valeur de température précise est atteinte.

4. Procédé selon l'une des revendications précédentes, **caractérisé en ce que** la température (T) et sa courbe sur l'échelle temps sont saisies et qu'un démarrage indépendant (A) est exécuté en fonction du gradient de température une fois qu'une valeur de température précise est atteinte.

5. Procédé selon l'une des revendications précédentes, **caractérisé en ce qu'**un démarrage indépendant (A) est exécuté plusieurs fois de suite.

6. Procédé selon l'une des revendications précédentes, **caractérisé en ce que** la température (T) est saisie et qu'un démarrage indépendant (A) est exécuté lorsque la température (T) atteint le point de congélation (G) ou descend en dessous.

7. Procédé selon l'une des revendications précédentes, **caractérisé en ce que** le rotor (3) est entraîné par un moteur électrique rotatif.

8. Procédé selon la revendication 7, **caractérisé en ce que** l'unité d'entraînement (7) électrique est commandée et alimentée en énergie électrique de sorte à accroître sa dissipation de chaleur comparé à la dissipation de chaleur résultant seulement de l'entraînement du rotor (3).

9. Procédé selon l'une des revendications précédentes, **caractérisé en ce que** le rotor (3) est entraîné par un moteur hydraulique rotatif.

10. Procédé selon l'une des revendications précédentes, **caractérisé en ce qu'**après l'écoulement d'une durée précise consécutive à l'arrêt du moteur à combustion, les démarrages indépendants (A) sont inhibés.

11. Séparateur rotatif (1) servant à traiter un flux de gaz chargé de particules et provenant d'un moteur à combustion, comprenant un rotor (3) entraîné en rotation, et une commande prévue pour l'exploitation du séparateur rotatif (1), ladite commande pilotant le séparateur rotatif (1) de façon à ce qu'il soit exploité conformément à un procédé 1 à 10.

FIG.1

FIG.2

# FIG.3

**Abscheider aktiv**

**Routine starten**

① Verbrennungsmotor ausgeschaltet? — ja / nein

**Timer 1 starten**

**Temperatur T messen**

② Temperatur T unterhalb Grenzwert $T_{grenz}$ — ja / nein

**Timer 2 starten und Timer 3 für Δt starten**

③ Timer T1 abgelaufen? — ja / nein

**Timer 4 starten, Rotor für Zeitdauer $Δt_{Reinigung}$ auf Drehzahl $n_{Wirkung}$ hochfahren**

**Zeit Δt abwarten**

④ Timer T2 abgelaufen? — ja / nein

**Sleep Mode**

**Temperatur T messen**

**Temperaturgradienten dT errechnen**
$$dT = (T(t_{n+1}) - T(t_n)) / ((t_{n+1}) - (t_n))$$

⑤ Temperaturgradient dT negativ und Betrag oberhalb Grenzwert $dT_{grenz}$ — ja / nein

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1532353 B1
- EP 1464797 A2
- JP 2010096033 A
- JP 2013036433 A